Europäisches Patentamt

European Patent Office

Office européen des brevets

(11) Numéro de publication: **0 311 545**
A2

# (12) DEMANDE DE BREVET EUROPEEN

(21) Numéro de dépôt: **88470019.6**

(22) Date de dépôt: **07.10.88**

(51) Int. Cl.⁴: **E 04 C 2/52**
A 47 B 57/56, E 03 C 1/324

(30) Priorité: **07.10.87 FR 8714024**

(43) Date de publication de la demande:
**12.04.89 Bulletin 89/15**

(84) Etats contractants désignés:
**AT BE CH DE ES FR GB IT LI LU NL SE**

(71) Demandeur: **Chailly, André**
**7 La Roche**
**F-88360 Rupt sur Moselle (FR)**

(72) Inventeur: **Chailly, André**
**7 La Roche**
**F-88360 Rupt sur Moselle (FR)**

(74) Mandataire: **Poupon, Michel**
**3, rue Thiers B.P. 247**
**F-88007 Epinal Cédex (FR)**

(54) **Assemblage permettant la fixation d'objets sur des cloisons constituées en panneaux préfabriqués.**

(57) Assemblage permettant la fixation d'objets sur des cloisons constituées de panneaux préfabriqués spécialement aménagées. Il se compose :
- de panneaux préfabriqués (2) en matière extrudée ou pressée comportant à l'intérieur des évidements longitudinaux et parallèles ;
- de rainures longitudinales (1) de formes spécifiques permettant l'accès aux évidements internes des panneaux ;
- de dispositifs de fixation adaptés aux bases d'ancrage constituées par les évidements et les rainures ;
- de montants permettant de constituer des cloisons sans rupture de l'entr'axe entre évidements et rainures consécutifs de deux panneaux contigus.

FIG 1

EP 0 311 545 A2

**Description**

## ASSEMBLAGE PERMETTANT LA FIXATION D'OBJETS SUR DES CLOISONS CONSTITUEES EN PANNEAUX PREFABRIQUES

La présente invention concerne un assemblage permettant la fixation d'objets sur des cloisons constituées de panneaux préfabriqués spécialement aménagées.

Issue d'une demande particulière, qui consistait à déterminer les meilleurs positions d'appareil d'aide au déplacement des handicapés dans leur milieu familial, il était nécessaire de trouver un système qui permettrait d'adapter et de tester rapidement et pratiquement les différentes positions des appareils, sans obligation de perçage des cloisons d'un stand ou d'une salle d'apprentissage spécialement installée en milieu hospitalier.

Les dispositifs actuels ne permettent pas de concevoir un ensemble fonctionnel, esthétique, économique.

En effet, les éléments type profilés devant être fixés en surface présentent des obstacles.

De même, les éléments type panneaux perforés ne permettent pas d'obtenir un dispositif de fixation simple et pratique.

Enfin, les éléments rapportés au mur ou sur panneaux pour la création de rainures sont d'une mise en oeuvre peu économique, comme proposé par le brevet allemand 875857 ou le brevet américain 4 568 050.

La solution proposée permet de remédier aux différents inconvénients énumérés ci-dessus, en mettant en oeuvre des panneaux alvéolaires préfabriqués en bois comprimé utilisés couramment pour la constitution de cloison sèche.

Conformément à l'invention, ce résultat est obtenu avec un assemblage permettant la fixation d'objets sur des cloisons constituées de panneaux préfabriqués spécialement aménagées, caractérisé en ce qu'il se compose :
- de panneaux préfabriqués en matière extrudée ou pressée comportant à l'intérieur des évidements longitudinaux et parallèles ;
- de rainures longitudinales de formes spécifiques permettant l'accès aux évidements internes des panneaux ;
- de dispositifs de fixation adaptés aux bases d'ancrage constituées par les évidements et les rainures ;
- de montants permettant de constituer des cloisons sans rupture de l'entr'axe entre évidements et rainures consécutifs de deux panneaux contigus.

La réalisation, par un moyen mécanique, de rainures de forme spéciale, en relation avec les évidements tubulaires verticaux permet d'obtenir les bases d'ancrage des dispositifs de fixation.

La présente invention peut s'adapter ou être utilisée pour toutes applications où il y a lieu de fixer de façon permanente, ou définitive tout objet sur des parois verticales ou autres constituées de panneaux spécialement constitués.

On comprendra mieux l'invention à l'aide de la description faite ci-après d'un mode de mise en oeuvre donné à titre d'exemple non limitatif, en référence aux dessins annexés dans lesquels :
    - la figure 1 est une vue de profil d'un panneau pour un assemblage conforme à l'invention ;
    - la figure 2 est une vue de dessus en plan, illustrant l'assemblage de plusieurs panneaux du type de celui de la figure 1 ;
    - la figure 3 est une vue de profil en détail d'une rainure d'un panneau de la figure 1 ;
    - la figure 4 est une vue éclatée du dispositif de fixation.

Le dispositif comprend l'aménagement de rainures (1) spécialement disposées sur des cloisons préfabriquées (2) de matière extrudée ou pressée comportant des évidements (3) de forme tubulaire ou autre.

Les rainures (1) correspondent à l'écartement (P1) des évidements ou à un multiple de celui-ci.

Les rainures (1) sont d'une longueur (P2) inférieure à la longueur (P3) des alvéoles et peuvent être disposées sur une face (4) ou sur deux faces (4,5) avec espaces alternés afin de laisser aux panneaux une résistance mécanique en relation avec leur utilisation.

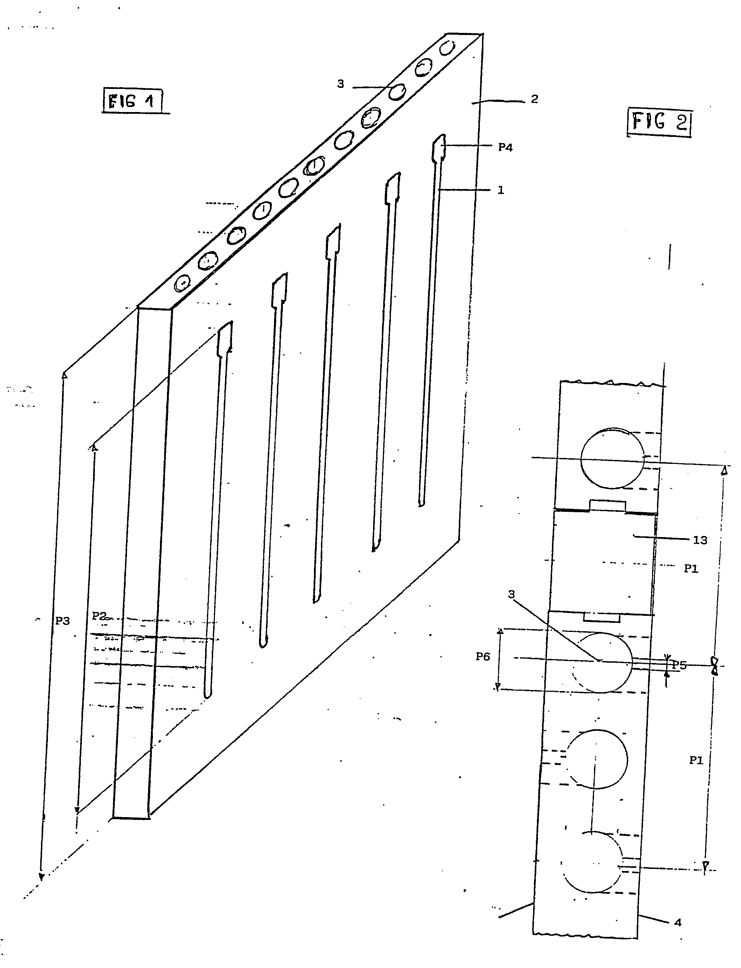

Les rainures (1) comportent une surlargeur (P4) qui peut être égale à la largeur (P6) de l'évidement (3), surlargeur située à un endroit quelconque de la rainure, sur la figure 1, elles sont réalisées en position haute.

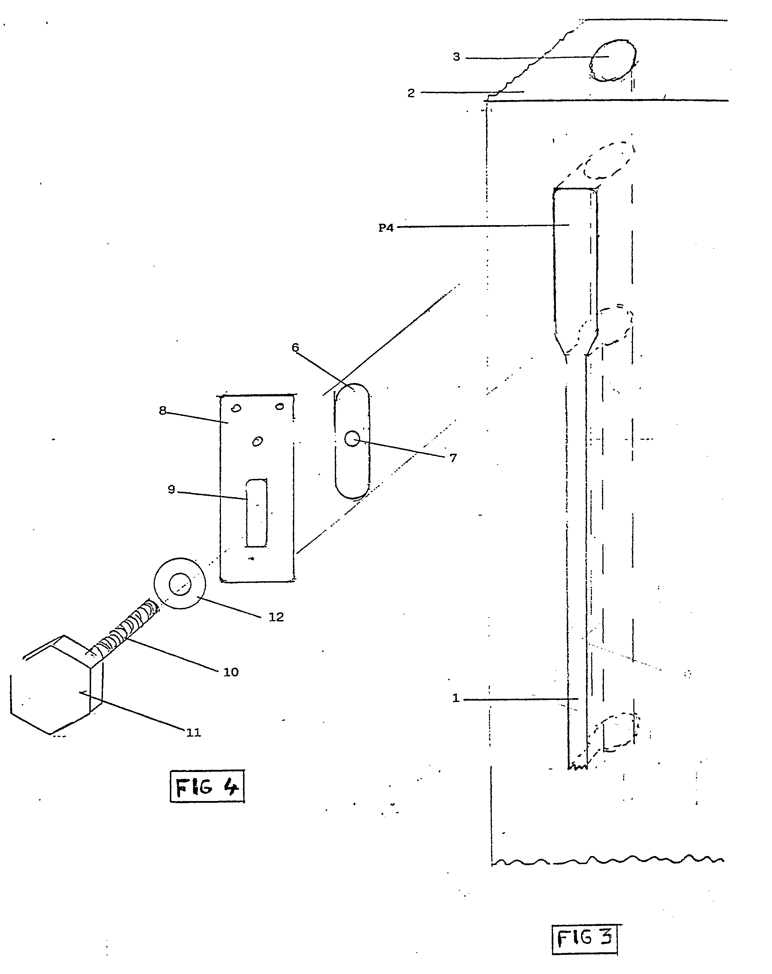

Les rainures (1) (évidements de matière) de largeur (P5) inférieure à la largeur (P6) des évidements (3) rejoignent ces dernières en position médiane (figure 2).

Le dispositif de fixation selon la figure 4 comporte trois parties ;
- la partie Insert (6) comporte un trou (7) taraudé en son centre et de forme adaptée aux dimensions inférieures à (P6) de l'évidement (3), ses extrémités sont de formes arrondies afin d'être introduite facilement par la surlargeur (P4) de la rainure (1) et de pouvoir coulisser dans l'évidement (3) du panneau,
- la partie contre-plaque (8) coulissant en surface du panneau comporte un un trou ou une lumière (9) permettant le passage de la tige (10) du dispositif de blocage, la contre-plaque étant adaptée comme support de l'objet à maintenir,
- le dispositif de blocage comporte une tête de manoeuvre (11) de forme diverse, volant, écrou, etc... Le dispositif de bloquage (10,11) s'appuyant sur la contre-plaque par la rondelle (12) utilise la partie (6) introduite dans l'alvéole comme écrou et enserre la partie de matière périphérique de la rainure ce qui solidarise l'ensemble dans la position recherchée.

Les dessins des figures 1,2,3,4 représentent l'exemple d'une réalisation d'aménagement de cloison à partir de panneaux de bois aggloméré de marque "FONTEX" dont les caractéristiques sont :
- épaisseur des panneaux 50 mm ; évidement tubulaire de 32 mm ;
- entr'axe entre évidements 41,5 mm ;
- entr'axe entre rainure chaque 6 tubulures soit 207,5 mm ;
- rainure de 9 mm sur une hauteur de 1400 mm à partir de 400 mm de la base du panneau ;
- surlargeur de 30 mm de large sur 140 mm de long en position haute.

Ces panneaux ont été assemblés par des montants intermédaires (13) de manière à obtenir une cloison continue de 5 m environ avec des intervalles identiques entre chaque rainure.

De nombreuses applications peuvent être envisagées avec des cloisonnements de pièces réalisées avec ces panneaux rainurés tels que : bibliothèque pour la fixation des étagères ; cuisine pour la fixation des meubles ; stand d'exposition ; présentoir de magasin, etc...

**Revendications**

1° Assemblage permettant la fixation d'objets sur des cloisons constituées de panneaux préfabriqués spécialement aménagées, caractérisé en ce qu'il se compose :
- de panneaux préfabriqués (2) en matière extrudée ou pressée comportant à l'intérieur des évidements longitudinaux et parallèles ;
- de rainures longitudinales (1) de formes spécifiques permettant l'accès aux évidements internes des panneaux ;
- de dispositifs de fixation adaptés aux bases d'ancrage constituées par les évidements et les rainures ;
- de montants (13) permettant de constituer des cloisons sans rupture de l'entr'axe entre évidements et rainures consécutifs de deux panneaux contigus.

2° Assemblage selon la revendication 1, caractérisé par la présence de rainures (1) communiquant avec les évidements (3) de longueur (P2) inférieure à la longueur (P3) des panneaux et

3° Assemblage selon l'une quelconque des revendications 1 et 2, caractérisé en ce que la largeur (P5) de la rainure (1) est inférieure à la largeur (P6) de l'évidement (3).

4° Assemblage selon l'une quelconque des revendications 1 à 3, caractérisé par une surlageur (P4) de la rainure (1) qui peut être identique à celle de l'évidement (3), surlargeur qui permet l'introduction de l'insert (6) du dispositif de fixation.

5° Assemblage selon l'une quelconque des revendications 1 à 4, caractérisé par un dispositif de fixation dont l'insert (6) qui sera de forme et de dimensions légèrement inférieures à celle de l'évidement (3).

FIG 1

FIG 2

FIG 4

FIG 3